Europäisches Patentamt

European Patent Office

Office européen des brevets

⑱

(11) Publication number: **0 090 869**
**B1**

# EUROPEAN PATENT SPECIFICATION

(12)

(45) Date of publication of patent specification: **06.08.86**

(21) Application number: **82102892.5**

(22) Date of filing: **05.04.82**

(51) Int. Cl.⁴: **F 16 B 23/00**

(54) Improvements in or relating to screws.

(43) Date of publication of application:
**12.10.83 Bulletin 83/41**

(45) Publication of the grant of the patent:
**06.08.86 Bulletin 86/32**

(84) Designated Contracting States:
**BE DE FR IT**

(56) References cited:
**DE-U-1 846 053**
**GB-A-1 498 827**
**US-A-2 180 633**
**US-A-3 134 292**
**US-A-3 282 145**

(73) Proprietor: **Colman Fasteners Co. Limited**
**Brooklands**
**Sale, Cheshire M33 1UL (GB)**

(72) Inventor: **Warham, Peter Geoffrey**
**65 Linnards Lane**
**Wincham Nr. Northwich Cheshire CW9 6ED (GB)**

(74) Representative: **Leach, John Nigel et al**
**FORRESTER & BOEHMERT Widenmayerstrasse**
**4/I**
**D-8000 München 22 (DE)**

EP 0 090 869 B1

## Description

This invention relates to screws and more particularly to tamper resistant screws. That is to say, screws which, subsequent to being driven, are difficult to unscrew, at least without a special tool.

Such a screw is disclosed in U.S. Patent 2180633 which has four channels in a head thereof arranged in a generally cross configuration, each channel being opposite another channel. The bottoms of the channels slope upwardly towards a centre portion. Such screws are not satisfactorily tamper resistant because if a conventional screwdriver blade is suitably shaped, e.g. by filing, the screws can be removed.

An object of the invention is to provide a new and improved tamper resistant screw.

According to the invention, we provide a tamper resistant screw comprising a shank and a head the head having a top surface on the opposite side of the head to the shank which is provided with a plurality of channels extending radially from a central part of the top surface disposed transversely of the longitudinal axis of the shank, the channels each having side surfaces at opposite sides of a bottom surface, the side surfaces being disposed. at equal distances from and on opposite sides of a radial plane containing the longitudinal axis of the shank and being of increasing depth from a minimum depth where they are closest to said central part to a maximum depth at the periphery of the head characterised in that there are at least five channels, no channel being disposed diametrically opposite any other channel, whereby operation of the screw with a conventional screwdriver blade is virtually impossible.

The side surfaces are preferably parallel to said radial plane.

The bottom surface of each channel is preferably planar.

The maximum depth of said side walls may lie in the range 0.8 millimetres to 2.5 millimetres.

Five channels may be provided angularly spaced apart at 72°.

The head may have an undersurface on the opposite side thereof to said top surface which is perpendicular to the longitudinal axis of the shank. Alternatively, the head may have an undersurface on the opposite side thereof to said top surface which is of conical configuration.

The bottom surface may be inclined to a plane normal to said longitudinal axis at an angle of approximately 25°.

According to a further aspect of the invention, we provide a screw driver for operating a screw according to the first aspect of the invention, the screwdriver comprising a shank portion and a head having a recess in the surface thereof opposite to the shank portion and comprising a centrally disposed planar portion in said recess disposed transversely of a longitudinal axis of the shank and a plurality of ribs extending radially and axially outwards from said planar portion and having side surfaces disposed at equal distances from and on opposite side of a top surface, said side surfaces being disposed at equal distances from and on opposite side of a radial plane containing the longitudinal axis of the shank and being of minimum depth where they are closest to said central part and of maximum depth at the periphery of the recess characterised in that at least five ribs are provided, no rib being disposed diametrically opposite any other rib.

The invention will now be described in more detail by way of example, with reference to the accompanying drawings wherein:—

Figure 1 is a plan view of a screw embodying the invention,

Figure 2 is a side elevation of part of the screw of Figure 1 and

Figure 3 is a perspective view of a tool for driving the screw of Figures 1 and 2.

Referring to the drawings, there is illustrated a screw 10 having a head 11 and a shank 12. The shank 12 is provided with a thread of any desired configuration, such as a machine thread, or a self-tapping thread for use in metal or a wood screw thread.

On the opposite side of the head 11 to the shank 12, the head has a top surface 13 of "pan-head" configuration, that is to say a generally flat portion 14 bounded by a frusto conical portion 15 having a small included angle of 10° and the portions 14 and 15 merging together in a rounded portion 16.

On the opposite side of the head 11 to the upper surface 13 is an undersurface 17 of annular configuration. If desired, the undersurface 17 may be of other configuration, for example, it may be of generally conical shape.

Five radially extending channels 18 are formed in the head 11. Each channel 18 extends from a pentagonal shaped central part 19 which extends transversely of and is centred on the longitudinal axis X—X of the screw shank. Each channel 18 comprises side surfaces 20 on opposite sides of a bottom surface 21 thereof. The surfaces 20 are disposed parallel to and at equal distances from a radial plane P which contains the axis X—X of the shank.

The surface 21 is inclined to a plane normal to the axis X—X at an angle of 25°. That is to say, the line of intersection between the plane P and the surface 21 is inclined to said normal plane at 25°. If desired, the angle inclination of the surface 21 to said normal plane may be at an angle other than 25°. As a result of the inclination of the surface 21, the walls 20 increase in depth from the end thereof closest to the axis X—X to a maximum depth at the periphery of the head. In the example illustrated, the walls 20 increase from zero depth, where they meet at the pentagonal central part 19, to a maximum depth lying in the range 1.00—1.75 millimetres depending upon the size of screw, as can be seen from the table below.

|        | 'A'* dia | 'B'* dim | 'C'* width | 'D'* depth |
| ------ | -------- | -------- | ---------- | ---------- |
| M3     | 6.00     | 1.80     | 1.00       | 1.00       |
|        | 5.70     | 1.66     |            |            |
| M3.5   | 7.00     | 2.10     | 1.15       | 1.15       |
|        | 6.64     | 1.96     |            |            |
| M4     | 8.00     | 2.40     | 1.20       | 1.25       |
|        | 7.64     | 2.26     |            |            |
| M5     | 10.00    | 3.00     | 1.65       | 1.65       |
|        | 9.64     | 2.86     |            |            |
| M6     | 12.00    | 3.60     | 1.75       | 1.75       |
|        | 11.57    | 3.42     |            |            |

\* All dimensions are in millimetres.

The channels 18 are equally angularly spaced by 72°.

Because of the channel configuration described above, it is difficult to drive or remove a screw embodying the invention without a tool adapted to engage with the driving surfaces of the head. That is to say, a tool having ribs of a configuration complementary to the channels of the head.

Because the channels are asymmetric diagonally of the screw head, and because they merge, at the ends thereof closest to the central axis of the screw, with the central part 19 of the head, it is not possible to engage a conventional screwdriver blade therewith. Further, because the depth of each channel, even at its maximum depth, is relatively small, it is not possible to easily rotate such a screw by engaging a screwdriver blade or other tool with one channel alone since there is a relatively small surface available for engagement in this fashion.

Therefore, whilst a screw embodying the invention can be easily driven to a desired torque by means of a complementary driving tool by an authorised user of the screw, any unauthorised user has the above described difficulty in driving the screw, or in removing the screw.

By providing five channels, an adequate surface area is available for engagement by an authorised tool whilst at the same time, each driving surface is of relatively small size thereby making it difficult for the screw to be rotated by an unauthorised tool engaged only with a single driving surface.

If desired, more than five channels may be provided, disposed so that no channel is diametrically opposite and in this case each driving surface can be made still smaller.

However, less than five channels is unsuitable since each channel has to be adequately deep to provide the necessary area to permit driving to a high torque and consequently, each channel provides a relatively large surface for engagement by an unauthorised tool and such a screw would therefore be more prone to unauthorised rotation.

Although in the above described example, the side surfaces of each channel have been described as being in a plane parallel to the plane P, they may, if desired, be slightly inclined to the said plane. Whilst this would still permit rotation with an especially adapted driver, it would make unauthorised rotation still more difficult as the tendency would be for any such unauthorised tool to "cam out" of the channel.

Although the case of a pan head screw with a undersurface lying in a plane normal to the axis X—X has been described, if desired, the screw head may be of other configuration, for example the undersurface may be of conical configuration so as to be receivable in a countersunk hole, and/or the upper surface may be of shallow conical configuration with a central portion centred on and extending transversely to the central axis, similar to the central portion 19 of the screw hereinbefore described.

If desired, other head configurations may be provided, for example, the upper surface may be of domed configuration and the undersurface similar to the surface 17 or the above described conical configuration.

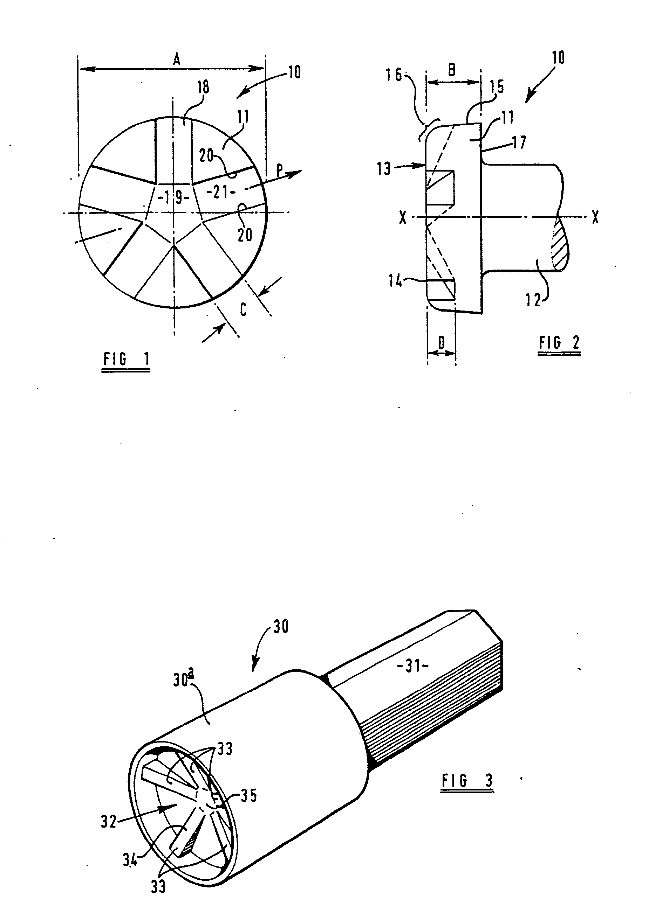

Referring now to Figure 3, there is shown a driving tool for use with the screw described hereinbefore. The tool has a head 30 and a shank 31 of any desired configuration. The shank may be provided with a handle for manual rotation of the tool, or may be adapted to be engaged in a power tool.

The head 30 comprises a generally cylindrical outer surface 30a and is formed with a recess 32. Within the recess 32 are five ribs 33 of a configuration complementary to the channels 18 of the screw with which the driver is intended to be used. That is to say, the ribs have side surfaces which are spaced apart a distance slightly smaller than the surfaces 20 of the channels 18 permitting engagement of the ribs within the channels and the ribs have a top surface 34 which is intended, in use, to lie parallel to and slightly spaced from the surfaces 21 of the channels. At the centre, the recess has a pentagonal portion 35 of dimensions complementary to the pentagonal portion 19 of the screw, and again intended to lie closely adjacent and parallel to the surface 19 of the screw in use.

Said side surfaces are preferably parallel to said radial plane.

Said top surface is preferably planar.

The maximum depth of said side walls may lie in the range 0.8 millimetres to 2.5 millimetres.

Five ribs may be provided angularly spaced apart at 72°.

**Claims**

1. A tamper resistant screw comprising a shank (12) and a head (11) the head having a top surface (13) on the opposite side of the head (11) to the shank (12) which is provided with a plurality of channels (18) extending radially from a central part (19) of the top surface (13) disposed transversely of the longitudinal axis of the shank, the channels (18) each having side surfaces (20) at opposite sides of a bottom surface (21), the side surfaces (20) being disposed at equal distances from and on opposite sides of a radial plane containing the longitudinal axis (X—X) of the shank (12) and being of increasing depth from a minimum depth where they are closest to said central part (19) to a maximum depth at the periphery of the head (11) characterised in that there are at least five channels, no channel (18) being disposed diametrically opposite any other channel (18) whereby operation of the screw with a conventional screwdriver blade is virtually impossible.

2. A screw according to Claim 1 characterised in that the side surfaces (20) are parallel to said radial plane.

3. A screw according to Claim 1 or Claim 2 characterised in that the bottom surface (21) of each channel (18) is planar.

4. A screw according to Claim 1 or Claim 2 characterised in that the bottom surface (21) of each channel (18) is inclined to a plane normal to said longitudinal axis (X—X).

5. A screw according to Claim 4 characterised in that the bottom surface (21) is inclined at an angle of approximately 25°.

6. A screw according to any one of Claims 1 to 5 characterised in that the maximum depth of said side surfaces (20) lies in the range 0.8 millimetres to 2.5 millimetres.

7. A screw according to any one of claims 1 to 6 characterised in that the minimum depth of said side surfaces (20) where they are closest to said central part, is zero.

8. A screw according to any one of Claims 1 to 7 characterised in that the five channels (18) are provided angularly spaced apart at 72°.

9. A screw according to any one of the preceding claims characterised in that the head (11) has an undersurface (17) on the opposite side thereof to said top surface (13) which is perpendicular to the longitudinal axis (X—X) of the shank (12).

10. A screw according to any one of Claims 1 to 9 characterised in that the head (11) has an undersurface (17) on the opposite side thereof to said top surface (13) which is of conical configuration.

11. A screwdriver for operating a screw according to any one of claims 1 to 9, the screwdriver comprising a shank portion (31) and a head (30) the head (30) having a recess (32) in the surface thereof opposite to the shank portion (31) and comprising a centrally disposed planar portion (35) in said recess (32) disposed transversely of a longitudinal axis of the shank (31) and a plurality of ribs (33) extending radially and axially outwards from said planar portion (35) and having side surfaces disposed at equal distances from and on opposite sides of a top surface (34), said side surfaces being disposed at equal distances from and on opposite side of a radial plane containing the longitudinal axis of the shank (31) and being of minimum depth where they are closest to said central part (35) and of maximum depth at the periphery of the recess (32) characterised in that at least five ribs are provided, no rib (33) being disposed diametrically opposite any other rib.

## Patentansprüche

1. Eine unbefugtes Lösen verhindernde Schraube aufweisend einen Schaft (12) und einen Kopf (11), wobei der Kopf eine obere Fläche (13) an der dem Schaft zugewandten Seite des Kopfes gegenüberliegenden Seite besitzt, die mit einer Mehrzahl von kanalartigen Ausnehmungen (18) versehen ist, die sich radial von einem Mittelbereich (19) auf der oberen Fläche (13) erstrecken, angeordnet quer zu Längsachse des Schaftes, wobei weiter die kanalartigen Ausnehmungen (18) jeweils Seitenflächen (20) an gegenüberliegenden Seiten der Bodenfläche (21) aufweisen, wobei die Seitenflächen (20) in gleichen Abständen und an gegenüberliegenden Seiten von einer radialen Ebene angeordnet sind, die die Längsachse (X—X) des Schaftes (12) enthält, und eine zunehmende Tiefe aufweisen, von einer minimalen Tiefe, in der sie am nächsten zu dem mittleren Bereich (19) sind, bis zu einer maximalen Tiefe am Umfang des Kopfes (11), dadurch gekennzeichnet, daß es mindestens fünf kanalartige Ausnehmungen sind, daß keine kanalartige Ausnehmung (18) diametral gegenüber einer anderen kanalartigen Ausnehmung (18) angeordnet ist, wodurch eine Betätigung der Schraube mit einer herkömmlichen Schraubenzieherklinge praktisch unmöglich ist.

2. Schraube nach Anspruch 1, dadurch gekennzeichnet, daß die Seitenflächen (20) parallel zu der radialen Ebene sind.

3. Schraube nach Anspruch 1 oder 2, dadurch gekennzeichnet, daß die Bodenfläche (21) jeder kanalartigen Ausnehmung (18) eben ist.

4. Schraube nach Anspruch 1 oder 2, dadurch gekennzeichnet, daß die Bodenfläche (21) jeder kanalartigen Ausnehmung (18) geneigt ist zu einer Ebene senkrecht zu der Längsachse (X—X).

5. Schraube nach Anspruch 4, dadurch gekennzeichnet, daß die Bodenfläche (21) um einen Winkel von etwa 25° geneigt ist.

6. Schraube nach einem der Ansprüche 1 bis 5, dadurch gekennzeichnet, daß die maximale Tiefe der Seitenflächen (20) im Bereich von 0,8 bis 2,5 mm liegt.

7. Schraube nach einem der Ansprüche 1 bis 6, dadurch gekennzeichnet, daß die minimale Tiefe der Seitenflächen (20), wo sie am nächsten zu dem mittleren Bereich sind, Null ist.

8. Schraube nach einem der Ansprüche 1 bis 7, dadurch gekennzeichnet, daß fünf kanalartige Ausnehmungen (18) vorgesehen sind, winkelmäßig beabstandet um 72°.

9. Schraube nach einem der vorstehenden Ansprüche, dadurch gekennzeichnet, daß der Kopf (11) eine untere Fläche (17) an der der oberen Oberfläche gegenüberliegenden Seite desselben besitzt, die rechtwinklig zur Längsachse (X—X) des Schaftes (12) ist.

10. Schraube nach einem der Ansprüche 1 bis 9, dadurch gekennzeichnet, daß der Kopf (11) eine untere Oberfläche (17) an der gegenüberliegenden Seite desselben bezüglich der oberen Oberfläche (13) besitzt, die konisch ausgestaltet ist.

11. Schraubenzieher zum Betreiben einer Schraube gemäß einem der Ansprüche 1 bis 9, wobei der Schraubenzieher einen Schaftbereich (31) und einen Kopf (30) aufweist, wobei weiter der Kopf (30) eine Aussparung (32) besitzt in einer Fläche desselben, die dem Schaftbereich (31) gegenüberliegt und einen zentral angeordneten ebenen Bereich (35) in der Aussparung (32) aufweist, angeordnet quer zu einer Längsachse des Schaftes (31), und eine Mehrzahl von Rippen (33), die sich radial erstrecken und Seitenflächen aufweisen, die in gleichen Abständen und an gegenüberliegenden Seiten einer oberen Oberfläche (34) vorgesehen sind, wobei weiter die Seitenflächen in gleichen Abständen und an gegenüberliegenden Seiten einer radialen Ebene angeordnet sind, die die Längsachse des Schaftes (31) enthält und eine minimale Tiefe aufweisen dort, wo sie am nächsten zu dem mittleren Bereich (35) sind und eine maximale Tiefe am Umfang der Aussparung (32), dadurch gekennzeichnet, daß zumindest fünf Rippen vorgesehen sind und keine Rippe (33) diametral gegenüber einer anderen Rippe angeordnet ist.

## Revendications

1. Vis inviolable comportant un corps (12) et une tête (11), la tête présentant une surface supérieure (13) sur le côté de la tête (11) opposé au corps (12) munie d'un certain nombre de rainures (18) s'étendant radialement à partir d'une partie centrale (19) de la surface supérieure (13) et disposées transversalement à l'axe longitudinal du corps, les rainures (18) présentant chacune des surfaces latérales (20) sur des côtés opposés d'une surface de fond (21), les surfaces latérales (20) étant disposées à égale distance, et de part et d'autre, d'un plan radial contenant l'axe longitudinal (X—X) du corps (12) et ayant une profondeur croissante depuis une profondeur minimale à l'endroit où elles sont le plus près de la partie centrale (19) jusqu'à une profondeur maximale à la prériphérie de la tête (11), caractérisée en ce qu'il y a au moins cinq rainures, aucune rainure (18) n'étant disposée diamètralement opposée à toute autre rainure (18), de sorte qu'il soit virtuellement impossible de manoeuvrer la vis avec une lame de tournevis classique.

2. Vis selon la revendication 1, caractérisée en ce que les surfaces latérales (20) sont parallèles audit plan radial.

3. Vis selon la revendication 1 ou la revendication 2, caractérisée en ce que la surface de fond (21) de chaque rainure (18) est plane.

4. Vis selon la revendication 1 ou la revendication 2, caractérisée en ce que la surface de fond (21) de chaque rainure (18) est inclinée par rapport à un plan normal audit axe longitudinal (X—X).

5. Vis selon la revendication 4, caractérisée en ce que la surface de fond (21) est inclinée d'un angle d'environ 25°.

6. Vis selon l'une quelconque des revendications 1 à 5, caractérisée en ce que la profondeur maximale des surfaces latérales (20) est dans la plage de 0,8 millimètre à 2,5 millimètres.

7. Vis selon l'une quelconque des revendications 1 à 6, caractérisée en ce que la profondeur minimale des surfaces latérales (20), à l'endroit où elles sont le plus près de ladite partie centrale, est nulle.

8. Vis selon l'une quelconque des revendications 1 à 7, caractérisée en ce que les cinq rainures (18) sont angulairement espacées de 72° l'une de l'autre.

9. Vis selon l'une quelconque des revendications précédentes, caractérisée en ce que la tête (11) présente sur son côté opposé à la surface supérieure (13) une surface inférieure (17) qui est perpendiculaire à l'axe longitudinal (X—X) du corps (12).

10. Vis selon l'une quelconque des revendications 1 à 9, caractérisée en ce que la tête (11) présente sur son côté opposé à la surface supérieure (13) une surface inférieure (17) qui a une forme conique.

11. Tournevis pour manoeuvrer une vis conforme à l'une quelconque des revendications 1 à 9, ce tournevis comportant une partie formant corps (31) et une tête (30), la tête (30) présentant un évidement (32) dans sa surface opposée à la partie formant corps (31) et comportant une partie plane (35) disposée centralement dans l'évidement (32) transversalement à un axe longitudinal du corps (31) ainsi qu'un certain nombre de nervures (33) s'étendant radialement et axialement vers l'extérieur à partir de la partie plane (35) et présentant des surfaces latérales disposées à égale distance et de part et d'autre d'une surface supérieure (34), ces surfaces latérales étant disposées à égale distance et de part et d'autre d'un plan radial contenant l'axe longitudinal du corps (31) et ayant une profondeur minimale à l'endroit où elles sont le plus près de la partie centrale (35) et une profondeur maximale à la périphérie de l'évidement (32), caractérisé en ce qu'il est prévu au moins cinq nervures, aucune nervure (33) n'étant disposée diamètralement opposée à toute autre nervure.

FIG 1

FIG 2

FIG 3